# EUROPEAN PATENT SPECIFICATION

(11) **EP 2 372 212 B1**
(45) Date of publication and mention of the grant of the patent: **31.07.2013**
(21) Application number: 11250379.2
(22) Date of filing: 25.03.2011
(51) Int. Cl.: F16L 27/08, F16J 15/08

(54) **Radial and axial compliant sliding seal incorporating spring capturing features for improved bearing plane sealing in an articulating nozzle**
Nachgiebige Radial- und Axialgleitdichtung mit Feder mit Funktionen zur verbesserten Abdichtung der Lagerebenen in einer beweglichen Düse
Joint coulissant radial et axial conforme intégrant des fonctionnalités de capture de ressort pour scellement amélioré de roulement dans une buse articulée

(30) Priority: 29.03.2010 US 748609
(43) Date of publication of application: 05.10.2011
(73) Proprietor: United Technologies Corporation, Hartford, CT 06101 (US)
(72) Inventor: Barry, Thomas M., Jr., East Hampton Connecticut 06424 (US); Hyland, James F., Jr., Farmington Connecticut 06032 (US)
(74) Representative: Stevens, Jason Paul

(56) References cited:
- US-A1- 2004 017 045

## Description

### BACKGROUND

This invention was made with government support under Contract No. N00019-02-C-3003 awarded by the United States Navy. The Government has certain rights in this invention.

Some aircraft have the capability to fly at supersonic velocities and have the manoeuvrability to allow for vertical take offs and landings. The aircraft may have a vertical lift fan near the cockpit that balances vertical lift at the rear of the aircraft provided by a swivelling an engine exhaust nozzle downwardly.

In normal flight mode, the lift fan is inactive and concealed in a fuselage. However, during takeoff or landing, a lift fan clutch may engage the aircraft engine which then acts as part turbo-fan and part turbo-shaft. Some of the engine horsepower is directed from the front of the engine off the low pressure spool to drive the lift fan. The lift fan draws air in through an intake behind the cockpit and accelerates it to provide fan thrust. At the rear of the aircraft, the engine nozzle can be swivelled downwardly to vector thrust downward and balance the lift force of the fan. When the lift fan clutches engages, the engine nozzle area is automatically increased to allow the fan turbine to extract more energy from the combustion gases to drive the lift fan. The exhaust nozzle can also be swivelled to provide pitch and yaw control.

A prior art seal for use in a swivelling jet pipe is disclosed in US 2004/0017045.

### SUMMARY

According to a preferred aspect of the invention, there is provided a duct having a plurality of sections, said duct further comprising a seal apparatus disposed between two of the sections, the seal apparatus comprising: a spring, a seal having a first holding member and having a first shaped body, and a seal carrier having a second holding member and a second shaped body such that one of said first shaped body or said second shaped body fits within the other of said first shaped body or said second shaped body to maintain a sealing relationship therebetween, and wherein said spring is maintained by said first holding member and said second holding member such that said spring urges said seal along said seal carrier towards an adjacent section; characterized in that said first holding member includes a plurality of ears distributed about an external circumference thereof, and said second holding member includes a plurality of tabs distributed about an external circumference thereof, wherein the spring is trapped between the tabs and the ears.

The invention also extends to a seal apparatus for use with such a duct.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a prior art cross sectional side elevation view of a variable geometry exhaust duct in a cruise position;
Figure 1 B is a prior art cross sectional side elevation view of a variable geometry exhaust duct in a hover position;
Figure 1 C is a prior art exploded perspective view of the exhaust duct assembly;
Figure 1 D is a prior art expanded partially fragmented view of a cooling liner within the exhaust duct assembly;
Figure 1 E is a prior art expanded view of a cooling liner within the exhaust duct assembly;
Figure 2 is an embodiment schematic partially in section disclosing the nozzles of Figure 1 and incorporating an embodiment of a seal used and disclosed herein.
Figure 3 is a side perspective view of a seal mounted on a seal carrier.
Figure 4 is a side schematic view of the seal and seal carrier in relationship to swivel ducts shown in Figure 2.

### DETAILED DESCRIPTION OF THE PREFERRED EMBODIMENT

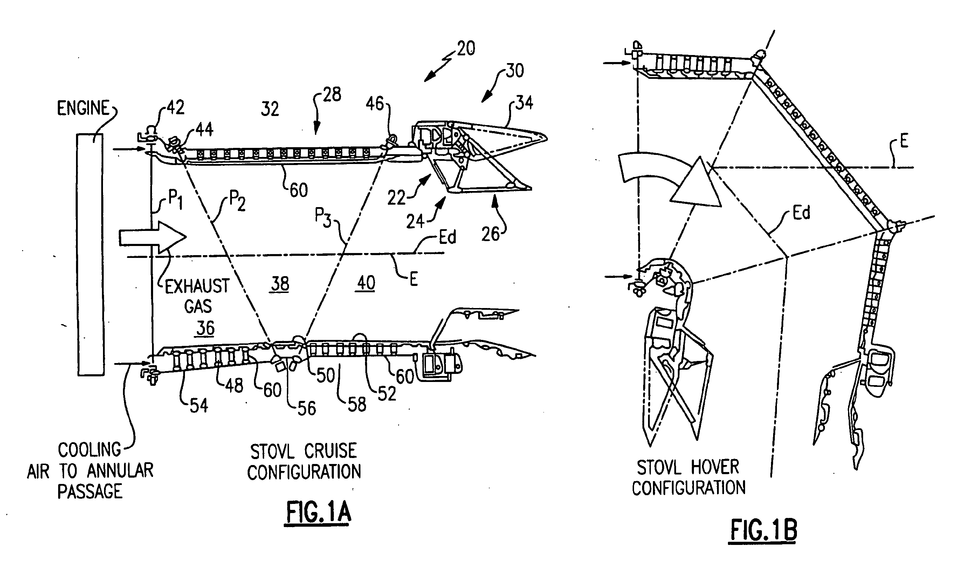

Figure 1A illustrates a sectional view of an exemplary prior art exhaust duct assembly 20 for a gas turbine engine in both an open position (phantom lines), typical of afterburning operation, and in a closed position (solid lines), typical of non-afterburning operation. The exhaust duct assembly 20 is utilized on an exhaust duct assembly that articulates for use in a short take off vertical landing (STOVL) type of aircraft.

The exhaust duct and nozzle assembly 20 is of the convergent-divergent nozzle type having a convergent flap region 22, a throat region 24, and a divergent flap region 26. The exhaust duct assembly 20 includes an exhaust duct section 28 which communicates with an exhaust nozzle 30.

The exhaust duct section 28 as illustrated herein is a three bearing swivel duct (3BSD) which rotates about three bearing planes (P1, P2, P3) to permit transition between a cruise configuration in which the exhaust duct axis Ed is arranged along an engine axis E (Figure 1A) and a hover configuration in which the exhaust duct axis Ed is articulated to a position transverse to the engine axis E (Figure 1B). The outer wall of the exhaust duct section 28 is formed from an exhaust duct case 32 having an aerodynamic nozzle external flap system 34.

The exhaust duct section 28 includes a forward exhaust duct segment 36, an intermediate exhaust duct segment 38 and a rear exhaust duct segment 40. The forward exhaust duct segment 36 is rotatable about the axis E at a first bearing joint 42, the intermediate exhaust duct segment 38 rotates relative to the forward exhaust duct segment 36 at a second bearing joint 44, and the rear exhaust duct segment 40 rotates relative to the intermediate duct segment 38 at a third bearing joint 46. The first bearing joint 42 is disposed along the first bearing plane P1, the second bearing joint 44 is disposed along the second bearing plane P2 and the third bearing joint 46 is disposed along a third bearing plane P3. The second bearing joint 44 and the third bearing joint 46 are generally disposed at a non-normal angle relative the engine axis E.

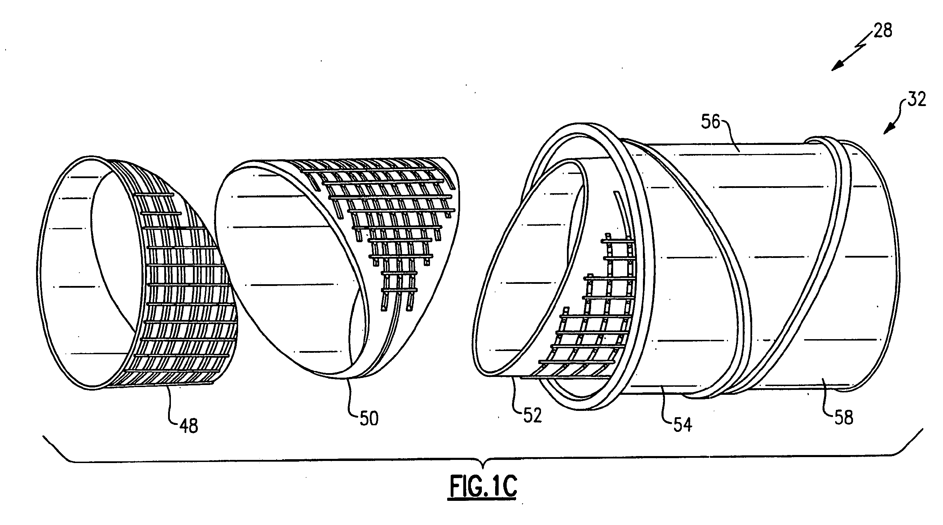

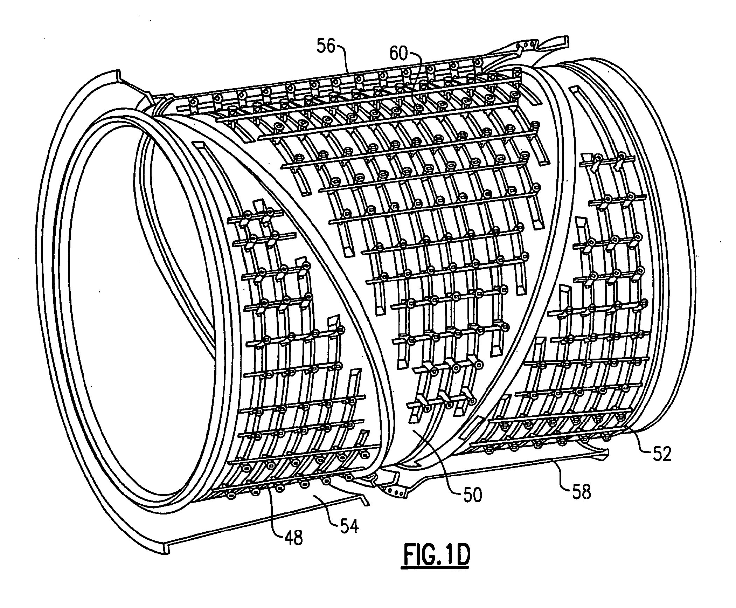

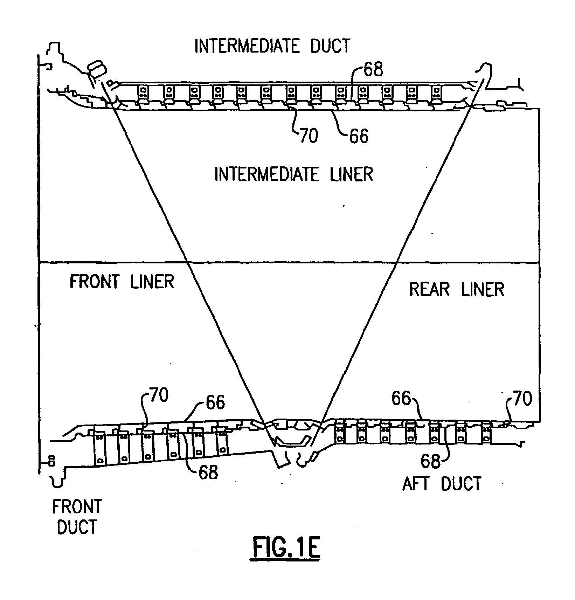

Each of the forward, intermediate and rear exhaust duct segment 36, 38, 40 include a forward, intermediate and rear cooling liner segment 48, 50, 52 which are exposed to the combustion gases and a forward, intermediate and rear outer duct case segment 54, 56, 58 (Figure 1C) spaced therefrom by an attachment hanger system 60 (Figure 1D). The cooling liner segment may be a cylindrical, serpentine or other such shaped member. It should be understood that each of the forward, intermediate and rear cooling liner segment 48, 50, 52 is an assembly that generally includes a hot sheet 66 separated from a corrugated cold sheet 68 by a plurality of stiffeners 70 (also illustrated in Figure 1E). It should also be understood that the term "corrugation" encompasses various rippled or non-planar surfaces that stiffen the structure and this disclosure is not to be limited to only the specific "corrugation" disclosed in the illustrated embodiment.

Referring to Figure 1 D, the attachment hanger system 60 is attached between the cold sheet 68 of the forward, intermediate and rear cooling liner segment 48, 50, 52 and the respective forward, intermediate and rear outer duct case segment 54, 56, 58. The attachment hanger system 60 at least partially permits for differential thermal expansion between the cold sheet 68 and the hot sheet 66. An annular passage may be defined between the forward, intermediate and rear cooling liner segment 48, 50, 56 and the forward, intermediate and rear outer duct cases 58, 60, 62 to provide passage of cooling air utilized for insulating the forward, intermediate and rear cooling liner segment 48, 50, 56.

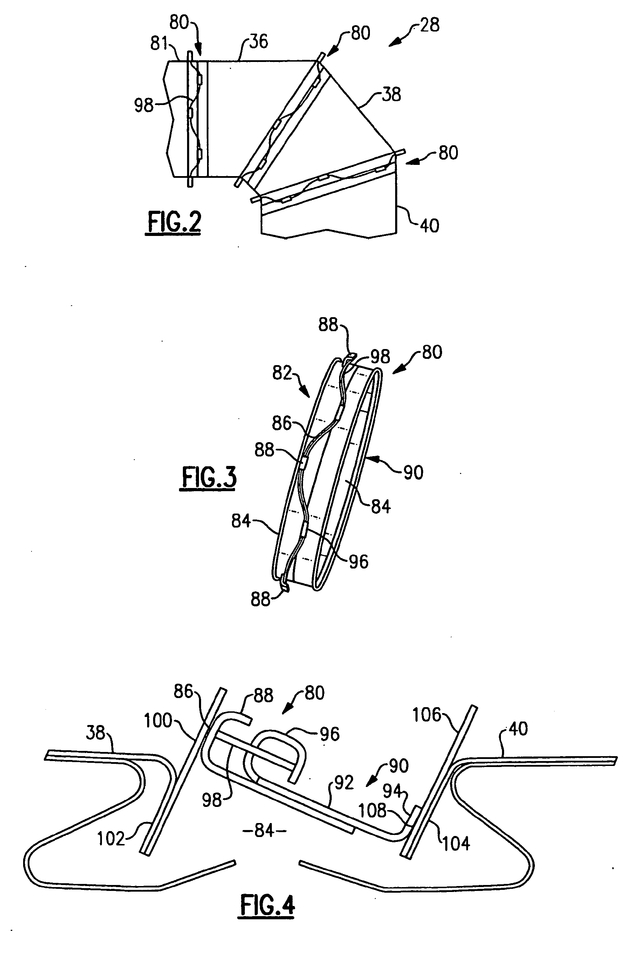

Referring now to Figure 2, the exhaust duct section 28 including the forward exhaust duct segment 36, an intermediate exhaust duct segment 38 and a rear exhaust duct segment 40 is provided with a seal apparatus 80 disposed between each pair of segments.

Referring now to Figures 2 and 3, a seal apparatus 80 that may be disposed between the forward exhaust duct segment 36 and the intermediate exhaust duct segment 38, the intermediate exhaust duct segment 38 and the rear exhaust duct segment 40 and the forward exhaust duct segment 36 and the engine (see Figure 1A) is shown in detail. Seal carrier 82 has a shaped body 84 such as a cylinder, a diameter, a seal carrier flange 86, and a plurality of seal carrier retention tabs 88 that act as a spring holder extending from said seal carrier flange 86.

The seal 90 has an annular, shaped body 92, such as a cylinder, having a diameter that allows the seal to slide over the seal carrier body diameter and be in contact therewith, a seal land portion 94 and a plurality of ears 96 that also act as a spring holder placed upon the annular body 92 for holding a spring 98 as will be discussed herein.

Because the duct segments rotate relative to each other and expand with heat, the shaped body 84 of the seal carrier 82 and the annular body 92, the spring 98 is wound through and held by the seal retention tabs 88 and the seal ears 96 disposed on the annular body 92 of the seal 90. The spring 98, which may be a wave or other type of spring, urges the seal 90 axially away from the seal carrier 82. A pressure differential across the seal apparatus 80 causes the seal annular body 92 to contact the seal carrier shaped body 84 to effectuate sealing contact therebetween.

Referring now to Figure 4, an exemplary cutaway view of an exhaust duct 28 of Figure 2 is shown and the relationship between the exhaust ducts and the seal apparatus 80 will be described hereinbelow. It is understood that this description also applies to a seal apparatus 80 that may attach to each other exhaust duct and another exhaust duct or the plane, engine or other duct 81 as shown in Figures 1 and 2.

For illustrative and not limiting purposes, Figure 4, shows one of the exhaust ducts 36, 38, or 40 or plane attachment 81 attaching to another exhaust duct and has an annular adapter plate 100 (or extension or flange or the like) attached to an angled inwardly flange 102 on the one of the exhaust ducts etc. by conventional means such as welding or riveting or the like. Similarly the seal carrier flange 86 is attached to the annular adapter plate 100 by convention means such as welding or riveting or the like.

An adjacent exhaust duct 36, 38, 40 also has an inwardly extending flange 104 (disposed at an obtuse angle relative to the outer surface of the exhaust duct 28) that carries an annular adapter plate 106 (also attached by conventional means as described herein above to the flange 104) that has a seal land portion 108. The annular adapter plates 106, 100 are parallel to each other so that the seal land portion 94 seats securely on the seal land portion 108 of the annular adapter plate 106 to effectuate a seal therebetween.

As noted above, the spring 98 trapped by the seal carrier tabs 88 and the seal ears 96, urges the land portion 94 against the seal land portion 104 to effectuate a seal therebetween even if the exhaust ducts rotate or move axially relative to each other.

Moreover, because the spring is maintained between the seal carrier tabs 88 and the seal ears 96, the seal will not tend to be caught between the seal carrier 82 and the seal apparatus 80 so that the seal apparatus 80 maintains the contact needed between the seal carrier 82 and the seal 90 necessary for function as noted hereinabove.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A seal apparatus (80) for a duct (20) having a plurality of sections (36, 38, 40), the seal apparatus (80) being adapted to be disposed between two of the sections (36, 38, 40), the seal apparatus (80) comprising:
a spring (98),
a seal (90) having a first holding member and having a first shaped body (92), and
a seal carrier (82) having a second holding member (86) and a second shaped body (84) such that one of said first shaped body (92) or said second shaped body (84) fits within the other of said first shaped body (92) or said second shaped body (84) to maintain a sealing relationship therebetween, and wherein said spring (98) is maintained by said first holding member and said second holding member (86) such that said spring (98) urges said seal (90) along said seal carrier (92) towards an adjacent section (36, 38, 40) of the duct;
**characterized in that** said first holding member includes a plurality of ears (96) distributed about an external circumference thereof, and said second holding member (86) includes a plurality of tabs (88) distributed about an external circumference thereof, wherein the spring (98) is trapped between the tabs (88) and the ears (96).

2. The seal apparatus (80) of claim 1 wherein said first shaped body is outboard of said second shaped body (84).

3. The seal apparatus (80) of claim 1 or 2 wherein said spring (98) is a wave spring.

4. A duct (20) having a plurality of sections (36, 38, 40), said duct comprising the seal apparatus (80) of any preceding claim disposed between two of the sections (36, 38, 40) wherein the seal (90) further comprises:
a land portion (94) extending therefrom for cooperating with an adjacent section (40) to create a sealing relationship therebetween.

5. The duct of claim 4 wherein said seal carrier (82) is fixedly attached to a section (38) and said seal (90) is urged by said spring (98) into contact with an adjacent section (40) to create a sealing relationship therebetween.

6. The duct of claim 5 wherein said seal carrier (82) is fixedly attached to said section (38) by means of an extension (100) protruding outwardly from said section (38).

7. The duct of claim 6 wherein said extension (100) is disposed at an obtuse angle relative to an outer surface of said section (38).

8. The duct of claim 5 wherein said adjacent section (40) has a land surface (104) for cooperating with said seal (90) to create a sealing relationship therewith, said land surface (104) being disposed at an angle relative to an outer surface of said adjacent section (40).

9. The duct of claim 8 wherein an extension (106) is disposed at an obtuse angle relative to an outer surface of said section (40).

10. The duct of any claims 4-9 wherein pressure in said duct (20) urges one of said seal carrier (82) or said seal (90) into an other of said seal carrier (82) or said seal (90).

## Patentansprüche

1. Dichtungsvorrichtung (80) für einen Kanal (20) mit einer Mehrzahl von Abschnitten (36, 38, 40), wobei die Dichtungsvorrichtung (80) dazu ausgebildet ist, zwischen zwei der Abschnitte (36, 38, 40) angeordnet zu werden, wobei die Dichtungsvorrichtung (80) aufweist:
eine Feder (98),
eine Dichtung (90) mit einem ersten Halteelement und mit einem ersten Formkörper (92), und
einen Dichtungsträger (92) mit einem zweiten Halteelement (86) und einem zweiten Formkörper (84), so dass einer von dem ersten Formkörper (92) und dem zweiten Formkörper (84) in den jeweils anderen von dem ersten Formkörper (92) und dem zweiten Formkörper (84) passt, um eine Abdichtbeziehung dazwischen aufrecht zu erhalten, und wobei die Feder (98) durch das erste Halteelement und das zweite Halteelement (86) derart gehalten ist, dass die Feder (98) die Dichtung (90) entlang des Dichtungsträgers (92) in Richtung auf einen benachbarten Abschnitt (36, 38, 40) des Kanals drückt;
**dadurch gekennzeichnet, dass** das erste Halteelement eine Mehrzahl von Laschen (96) aufweist, die um einen Außenumfang desselben verteilt sind, und dass das zweite Halteelement (86) eine Mehrzahl von Zungen (88) aufweist, die um einen Außenumfang desselben verteilt sind, wobei die Feder (98) zwischen den Zungen (88) und den Laschen (96) eingeschlossen ist.

2. Dichtungsvorrichtung (80) nach Anspruch 1,
wobei der erste Formkörper außenseitig von dem zweiten Formkörper (84) vorgesehen ist.

3. Dichtungsvorrichtung (80) nach Anspruch 1 oder 2,
wobei die Feder (98) eine Wellenfeder ist.

4. Kanal (20) mit einer Mehrzahl von Abschnitten (36, 38, 40), wobei der Kanal die Dichtungsvorrichtung (80) nach einem der vorhergehenden Ansprüche aufweist, die zwischen zwei der Abschnitte (36, 38, 40) angeordnet ist, wobei die Dichtung (90) ferner Folgendes aufweist:
einen sich von dieser weg erstreckenden Flächenbereich (94) zum Zusammenwirken mit einem benachbarten Abschnitt (40), um eine Abdichtbeziehung dazwischen zu erzeugen.

5. Kanal nach Anspruch 4,
wobei der Dichtungsträger (82) an einem Abschnitt (38) fest angebracht ist und wobei die Dichtung (90) durch die Feder (98) in Kontakt mit einem benachbarten Abschnitt (40) gedrängt wird, um eine Abdichtbeziehung dazwischen zu erzeugen.

6. Kanal nach Anspruch 5,
wobei der Dichtungsträger (82) an dem Abschnitt (38) mittels einer Verlängerung (100) fest angebracht ist, die von dem Abschnitt (38) nach außen ragt.

7. Kanal nach Anspruch 6,
wobei die Verlängerung (100) in einem stumpfen Winkel relativ zu einer Außenfläche des Abschnitts (38) angeordnet ist.

8. Kanal nach Anspruch 5,
wobei der benachbarte Abschnitt (40) einen Flächenbereich (104) zum Zusammenwirken mit der Dichtung (90) aufweist, um eine Abdichtbeziehung mit dieser zu erzeugen, wobei der Flächenbereich (104) in einem Winkel relativ zu einer Außenfläche des benachbarten Abschnitts (40) angeordnet ist.

9. Kanal nach Anspruch 8,
wobei eine Verlängerung (106) in einem stumpfen Winkel relativ zu einer Außenfläche des Abschnitts (40) angeordnet ist.

10. Kanal nach einem der Ansprüche 4 bis 9, wobei Druck in dem Kanal (20) eines von dem Dichtungsträger (82) und der Dichtung (90) in das jeweils andere von dem Dichtungsträger (82) und der Dichtung (90) drückt.

## Revendications

1. Dispositif d'étanchéité (80) pour un conduit (20) ayant une pluralité de sections (36, 38, 40), le dispositif d'étanchéité (80) étant conçu pour être disposé entre deux des sections (36, 38, 40), le dispositif d'étanchéité (80) comprenant :
un ressort (98),
un joint (90) ayant un premier élément de retenue et ayant un premier corps façonné (92), et
un support de joint (82) ayant un second élément de retenue (86) et un second corps façonné (84) de sorte que l'un desdits premier corps façonné (92) ou second corps façonné (84) s'ajuste dans l'autre desdits premier corps façonné (92) ou second corps façonné (84) pour maintenir une relation d'étanchéification entre les deux, et dans lequel ledit ressort (98) est maintenu par ledit premier élément de retenue et ledit second élément de retenue (86) de sorte que ledit ressort (98) pousse ledit joint (90) le long dudit support de joint (92) vers une section adjacente (36, 38, 40) du conduit ;
**caractérisé en ce que** ledit premier élément de retenue inclut une pluralité de crampons (96) répartis sur sa circonférence externe, et ledit second élément de retenue (86) inclut une pluralité de pattes (88) réparties sur sa circonférence externe, dans lequel le ressort (98) est immobilisé entre les pattes (88) et les crampons (96).

2. Dispositif d'étanchéité (80) selon la revendication 1, dans lequel ledit premier corps façonné est extérieur audit second corps façonné (84).

3. Dispositif d'étanchéité (80) selon la revendication 1 ou 2, dans lequel ledit ressort (98) est un ressort ondulé.

4. Conduit (20) ayant une pluralité de sections (36, 38, 40), ledit conduit comprenant le dispositif d'étanchéité (80) selon l'une quelconque des revendications précédentes disposé entre deux des sections (36, 38, 40), dans lequel le joint (90) comprend en outre :
une partie d'appui (94) s'étendant à partir de ce dernier en vue de coopérer avec une section adjacente (40) afin de créer une relation d'étanchéification entre les deux.

5. Conduit selon la revendication 4, dans lequel ledit support de joint (82) est attaché de manière fixe à une section (38) et ledit joint (90) est poussé par ledit ressort (98) de manière à entrer en contact avec une section adjacente (40) pour créer une relation d'étanchéification entre les deux.

6. Conduit selon la revendication 5, dans lequel ledit support de joint (82) est attaché de manière fixe à ladite section (38) au moyen d'un prolongement (100) faisant saillie vers l'extérieur à partir de ladite section (38).

7. Conduit selon la revendication 6, dans lequel ledit prolongement (100) est disposé de manière à former un angle obtus par rapport à une surface extérieure de ladite section (38).

8. Conduit selon la revendication 5, dans lequel ladite section adjacente (40) présente une surface d'appui (104) destinée à coopérer avec ledit joint (90) pour créer une relation d'étanchéification avec celui-ci, ladite surface d'appui (104) étant disposée de manière à former un angle par rapport à une surface extérieure de ladite section adjacente (40).

9. Conduit selon la revendication 8, dans lequel un prolongement (106) est disposé de manière à former un angle obtus par rapport à une surface extérieure de ladite section (40).

10. Conduit selon l'une quelconque des revendications 4 à 9, dans lequel une pression dans ledit conduit (20) pousse l'un dudit support de joint (82) ou dudit (90) à l'intérieur d'un autre dudit support de joint (82) ou dudit joint (90).
